# EUROPEAN PATENT APPLICATION

(11) **EP 4 429 039 A1**
(43) Date of publication of application: **11.09.2024**
(21) Application number: 23161314.2
(22) Date of filing: 10.03.2023
(51) Int. Cl.: H01R 13/58, H01R 13/585, H01R 13/595

(54) **PINCH SLEEVE ASSEMBLY WITH LOCKING FEATURE**

(71) Applicant: TE Connectivity Nederland B.V., 5222 AR's-Hertogenbosch (NL)
(72) Inventor: DENDAS, Freddy Jean Philipp, 5222 's-Hertogenbosch (NL)
(74) Representative: Grünecker Patent- und Rechtsanwälte PartG mbB

(57) **Abstract**

The invention relates to a pinch sleeve (2) for pinching an electric cable (8) in an electric connector (48), wherein the pinch sleeve surrounds an interior volume (40) for receiving the electric cable, the interior volume penetrating the pinch sleeve in an axial direction (14), wherein the pinch sleeve comprises pinch fingers (22) that extend in the axial direction from a respective base (26) to a respective free end (28) and that are arranged in a circumferential direction (16), the circumferential direction extending around the axial direction, and a ring member (24) that connects the bases of the pinch fingers in the circumferential direction (16), and wherein the ring member is provided with protruding coupling teeth (46) for rotational engagement with another element of the electric connector. Further, the invention concerns an assembly comprising such a pinch sleeve 2 and an electric connector comprising such an assembly. Due to the assembly, a stable and permanent fixation of an electric cable in the assembly is ensured.

## Description

The invention relates to a pinch sleeve for pinching an electric cable in an electric connector, and an assembly comprising such a pinch sleeve and a housing element of an electric connector. The invention further relates to such an assembly comprising a tightening sleeve.

Pinch sleeves are used for fastening electric cables inside electric connectors. The cables are held by a pinching grip of the pinch sleeve. To tighten the pinch sleeve around the cable - typically the cable insulation - a tightening sleeve is used. The tightening sleeve may be screwed onto a housing part of an electrical connector with the pinch sleeve interposed therebetween.

In general, it is desired that the clamping force of the pinch sleeve does not diminish over time, causing the tightening sleeve or the cable to loosen. It is also important that the pinch sleeve does not damage the cable sheath.

It is therefore an object of the invention to provide a pinch sleeve which prevents loosening of the pinched cable and the tightening sleeve.

This object is solved by a pinch sleeve for pinching an electric cable in an electric connector, wherein the pinch sleeve surrounds an interior volume for receiving the electric cable, the interior volume penetrating the pinch sleeve in an axial direction, wherein the pinch sleeve comprises pinch fingers that extend in the axial direction from a respective base to a respective free end and that are arranged in a circumferential direction, the circumferential direction extends around the axial direction and a ring member that connects the bases of the pinch fingers in the circumferential direction, and wherein the ring member is provided with protruding coupling teeth for rotational engagement with another element of the electric connector.

The coupling teeth are a structural precondition for enabling a frictional locking and/or form-locking connection with other elements of the connector, such as a tightening sleeve. Thereby, a rotational movement between the pinch sleeve and a tightening sleeve can be locked during tightening, preventing the pinch sleeve from rotating and loosening. The pinch fingers are provided for gripping and pinching the cable. The grip of the pinch fingers on the cable is maintained in that the pinch sleeve is rotationally locked.

The above invention may be further improved by adding one or more of the features described in the following, whereby each of these features is advantageous in itself, and may be combined independently and/or in any desired manner with any of the other features described in the following.

For example, the coupling teeth may be at least partially rounded and/or at least partially pointed. Optionally, the coupling teeth may be rounded sinusoidally. Thereby, the friction between the coupling teeth and complementary coupling teeth, e.g. provided at a tightening sleeve, can be adjusted. This has the advantage that the haptic feedback during tightening is improved and material wear is reduced.

According to another embodiment of the invention, the ring member may have an end face facing away from the pinch fingers along the axial direction and the end face may comprise the coupling teeth that protrude along the axial direction away from the pinch fingers. In this embodiment, the ring member may have a thin wall, saving space in the radial direction. In an alternative or cumulative embodiment, the coupling teeth may be arranged on a circumferential surface of the ring member and protrude radially inwards and/or outwards from the ring member.

According to a further aspect, at least one of the pinch fingers may overlap at least one neighboring pinch finger in the radial direction, the radial direction being perpendicular to the axial direction. For example, the pinch fingers may have side faces, which side faces face in the circumferential direction and are inclined with respect to the radial direction. The side faces may be parallel to the axial direction. Thereby, the diameter of the cylindrical space enclosed by the pinch fingers is adjustable, allowing cables of a larger span of diameters to be accommodated.

In another embodiment, an inner section of the pinch finger may overlap in the radial direction, an outer section of a neighboring pinch finger, and/or an outer section of the pinch finger may overlap in the radial direction an inner section of a neighboring pinch finger. In particular, an inner section of the pinch finger may face the interior volume and an outer section of the pinch finger may face away from the interior volume. Here, the pinch fingers may rest on each other and slide with respect to one another, when they are deflected radially inwards. This allows for a greater range of cable diameters to be pinched by the pinch sleeve.

Preferably, the pinch fingers may be spaced apart from each other in the circumferential direction at least at the basis. In particular, they may be spaced apart from each other in the circumferential direction along the entire length in a force-free state. The distance between the pinch fingers allows for their movement in a radially-inward direction and to accommodate a larger range of cable diameters.

According to another embodiment of the invention, at least some of the pinch fingers may comprise a retaining protrusion that protrudes towards the interior volume, i.e. radially inwards. The retaining protrusion may be hook-like and/or form a shoulder with an axially-facing retaining face.

Preferably, the retaining protrusion may be arranged at the free end of the pinch fingers. The retaining protrusion can be used to establish a form-locking connection with other elements of the connector. For example, the retaining protrusion may be used to hold a sealing member, which may rest against cable.

To prevent contaminants from entering the connector, the pinch ring may optionally comprise a sealing element, which is located/received in the interior volume abutting the retaining protrusion of the pinch fingers. In particular, the sealing element may abut the retaining protrusions of the pinch fingers.

Further, an assembly comprising a pinch sleeve, according to one of the above embodiments of the invention, and a housing element of an electric connector may be provided, wherein the housing element may comprise complimentary coupling teeth, the complementary coupling teeth of the housing element being configured to engage the coupling teeth of the pinch sleeve. In the engaged state, the complementary coupling teeth and the coupling teeth in particular may form a torsionally and/or rotationally stiff coupling. In particular, the complementary coupling teeth and the coupling teeth may be configured to prevent relative rotation movement between the pinch sleeve and the housing element. In this way, a rotational movement between the pinch sleeve and the housing element can be locked if the pinch sleeve is e.g. tightened around the cable by a tightening sleeve.

Additionally, an assembly comprising the pinch sleeve to one of the above embodiments and a tightening sleeve may be provided, wherein the tightening sleeve may comprise a bevel that is configured to abut the free ends of the pinch fingers, and at least one driver that is configured to engage between two neighboring pinch fingers. The bevel is used for deflecting the free ends of the pinch fingers in a radially inward direction if the tightening sleeve is moved axially towards the pinch sleeve. The driver prevents the tightening sleeve from rotating backwards by creating a form-locking connection with at least one pinch finger. Further, the driver provides a ratchet-like haptic feedback to a user while rotating the tightening sleeve relative to the pinch sleeve. This enhances the user's control of the tightening process.

In particular, two or more drivers may be provided that are spaced apart from another in the circumferential direction. Optionally, three or more drivers may be provided spaced apart from one another in the circumferential direction.

According to a further advantageous embodiment, the driver may be configured to engage or be inserted radially between two neighboring pinch fingers at at least one of (1) the free ends of the two neighboring pinch fingers and a location between the free end, and (2) the base of the two neighboring pinch fingers. An engagement of the driver at the free ends of the pinch fingers allows the pinch fingers in the circumferential direction to be bent. This may improve the formation of a circumferentially closed ring around the cable by the free ends, which in turn, avoids an only punctual pinch onto the cable by the pinch fingers.

Optionally, the driver may be configured to engage axially between two neighboring pinch fingers at an end face of the pinch fingers, the end face facing away from the ring member in the axial direction.

Relating to a further aspect of the invention, the at least one driver may protrude from the tightening sleeve in at least one of the axial direction and a radial direction. Thereby, during tightening of the tightening sleeve, the at least one driver may engage with a pinch finger, preventing the tightening sleeve from rotating backwards.

According to another embodiment, the driver may protrude in the axial direction from the bevel. This has the advantage that the pinch fingers can be contacted by the driver as close as possible to their free ends, which has a positive influence on the haptic feedback during tightening.

According to a further advantageous embodiment, the tightening sleeve may comprise a receptacle that is configured to receive at least the pinch fingers of the pinch sleeve in the axial direction, the receptacle having a substantially cylindrical inner wall, wherein the driver is located on the inner wall. An assembly according to this embodiment enables a space-saving mounting of the individual components, which has constructional advantages. Further, this embodiment allows the at least one driver to engage the pinch fingers closer to their base, where there is a gap between neighboring pinch fingers even if they are tightened around cables of small diameters.

In particular, the driver may preferably extend axially along the bevel and along the cylindrical wall. For example, the driver may be shaped as a rib.

According to another embodiment, the at least one driver may have a first face and a second face, the first face facing in the circumferential direction and the second face being located opposite to the first face with respect to the circumferential direction. The first face preferably has a lower inclination with respect to the circumferential direction than the second face. This makes it possible to lock or transmit a rotational movement depending on the direction of rotation, as either the first face or the second face is engaged with parts of the pinch fingers. In particular, the driver may have a saw-tooth cross-section in a plane perpendicular to the axial direction.

According to a further aspect, the tightening sleeve may comprise a screw thread having a handedness and the first face may face in the direction of the handedness. This has the advantage that the rotation of the tightening sleeve is not locked in the direction of the handedness, so tightening of the tightening sleeve is facilitated.

In one embodiment, an electric connector is provided, which comprises an assembly according to one of the above embodiments. In such a connector, the coupling teeth of the pinch sleeve may engage the complementary coupling teeth of the housing element and/or at least one driver may extend between two neighboring pinch fingers.

The pinch sleeve may be received in the receptacle of the tightening screw.

The tightening screw may be mounted on the housing element with the pinch sleeve interposed therebetween.

The housing element may comprise a complementary thread complementary to the thread of the tightening screw. For example, the housing element may comprise an outer thread complementary to an inner thread of the tightening screw. The pinch sleeve may be located in the axial direction between the complementary thread and the bevel. The thread of the tightening screw may engage the complementary thread of the housing element.

Further, an electric connector is provided, wherein-in particular, if a cable is mounted and pinched-the pinch fingers may be torsionally distorted between their respective base and the axial location, and wherein the at least one driver may engage between two neighboring pinch fingers.

According to another aspect of the invention, the pinch fingers, at their free ends, may abut each other in the circumferential direction forming a continuous annular surface that faces the interior volume-in particular, if a cable is mounted and pinched. Thereby, an even pressure between the continuous annular surface and the cable, which is inserted into the electric connector, is ensured, preventing possible damage and plastic deformation to the pinched cable sheath.

In the following, the invention is explained exemplarily in more detail with reference to the drawings and in accordance with several embodiments, the different features of which can be combined with one another as desired in accordance with the above general description. Moreover, a feature may be omitted from the below embodiments if its technical effect is not required in a particular application. Likewise, a feature described above that is not present in an embodiment as described below may be added if its technical effect is not essential for a particular application.

In the following, the same reference numerals are used for elements that correspond to each other with respect to at least one of structure and function.
- Fig. 1: shows a schematic sectional view of an assembly according to possible embodiment of the invention;
- Fig. 2: shows a schematic perspective view of a pinch sleeve and a housing element according to a possible of the invention;
- Fig. 3: shows a schematic perspective view of a tightening sleeve according to a possible embodiment of the invention;
- Fig. 4: shows a schematic perspective detail view of a tightening sleeve according to a possible embodiment of the invention; and
- Fig. 5: shows a schematic perspective view of a pinch sleeve in an engaged state according to a possible embodiment of the invention.

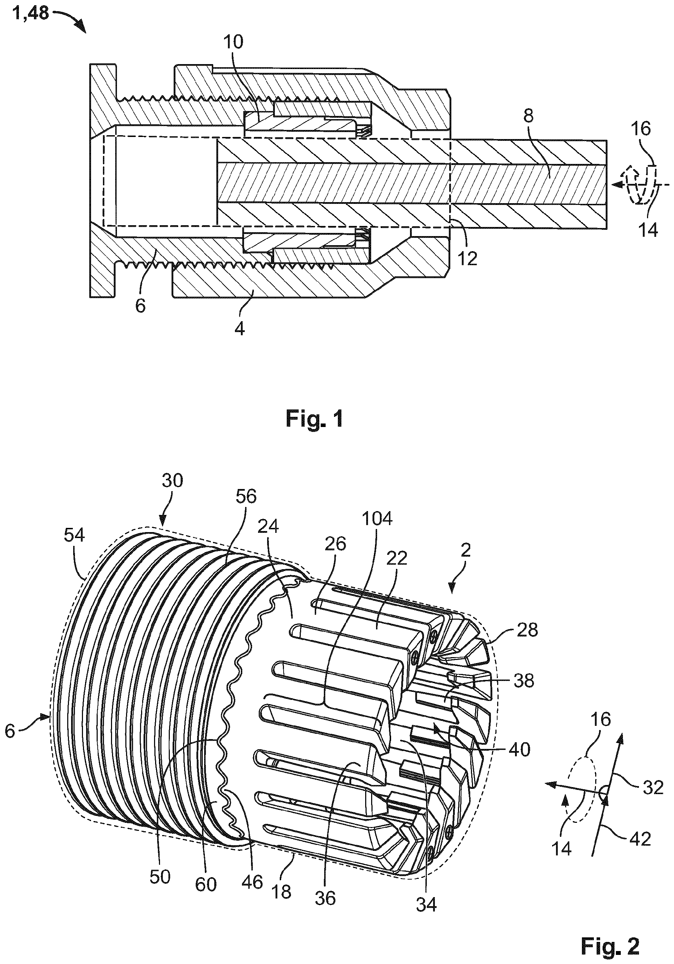

First, the general structure of an assembly 1 according to a possible embodiment of the invention is described with reference to Fig. 1.

The assembly 1 comprises at least a pinch sleeve 2. The assembly 1 may further comprise a tightening sleeve 4, a housing element 6, an electric cable 8, and a sealing 10. All elements of the assembly 1 surround an approximate cylindrical cavity 12 extending in an axial direction 14. The cavity 12 is configured for receiving the electric cable 8.

As shown, the electric cable 8 may be positioned inside the cavity 12 of the assembly 1 and extend in an axial direction 14 through the assembly 1. Thus, the electric cable 8 is coaxially surrounded by all elements of the assembly 1 in a circumferential direction 16, the circumferential direction 16 extending around the axial direction 14.

The assembly 1 may be used as an electric connector 48.

Fig. 2 shows details of the structure of a pinch sleeve 2 according to several embodiments of the invention. The pinch sleeve 2 has the approximate shape of a cylinder 18, the central axis of the cylinder 18 extending in the axial direction 14. The pinch sleeve 2 comprises pinch fingers 22 and a ring member 24.

Each of the pinch fingers 22 comprises a base 26 and a free end 28 and extends in the axial direction 14. The pinch fingers 22 are arranged along a circumferential direction 16, the circumferential direction 16 extending around the axial direction 14.

Two neighboring pinch fingers 22 may be spaced apart from one another at their bases 26 in the circumferential direction 16. In particular, in a force-free state 30, the pinch fingers 22 may be spaced apart along the entire length. Then, the pinch fingers 22 are parallel to each other and to the axial direction 14.

Optionally, at least one of the pinch fingers 22 may overlap at least one neighboring pinch finger 22? in the radial direction 32. The radial direction 32 is perpendicular to the axial direction 14. In particular, an inner section 34 of the pinch finger 22? may overlap an outer section 36 of the neighboring pinch finger 22? in the radial direction 32. The radial direction 32 is perpendicular to the axial direction 14 and to the circumferential direction 16. Analogously, the outer section 36 of the pinch finger 22 may overlap the inner section 34 of the neighboring pinch finger 22. Pinch fingers 22 are regarded as neighboring, if located next to each other in the circumferential direction 16.

At least some, preferably all of the pinch fingers 22 may comprise a retaining protrusion 38. The retaining protrusion 38 protrudes into an? interior volume 40 in the radial inward direction 42 and in the axial direction 14. The retaining protrusion 38 may be located at the free ends 28 of the pinch fingers 22. The retaining protrusion 38 may be hook-shaped and/or provide a shoulder with a face facing in the axial direction 14 towards the base 26 of the respective pinch finger 22. The retaining protrusion 38 protrudes towards the interior volume 40 of the pinch sleeve 2. The interior volume 40 of the pinch sleeve 2 may be substantially cylindrical and the mantle surface 44 of the interior volume 40 may be defined by the inner sections 34 of the pinch fingers 22.

The pinch sleeve 2 further comprises a ring member 24. The ring member 24 is located at an end of the pinch sleeve 2 opposite the free ends 28. The ring member 24 connects the bases 26 of the pinch fingers 22 in the circumferential direction 16. For example, the ring member 24 may be connected to the bases 26 of the pinch fingers 22 through material-locking, friction-locking, or form-locking. In particular, the ring member 24 and the pinch finger 22 may be formed monolithi-cally.

The ring member 24 comprises coupling teeth 46, which protrude from the ring member 24. The coupling teeth 46 are provided for rotational engagement with another element of the electric connector 48 as is described further below. The coupling teeth 46 may be at least partially rounded. In particular, the roundings can be sinusoidal in shape. Additionally and/or cumulatively, the coupling teeth may also be at least partially pointed, e.g. tooth-like.

In particular, the coupling teeth 46 may be located at an end face 50 of the ring member 24. The end face 50 faces away from the pinch fingers 22 along the axial direction 14. The coupling teeth protrude away from the pinch fingers 22 along the axial direction 14.

The housing element 6 is approximately cylindrical. The lateral surface 52 of the housing cylinder 18 comprises a housing thread 56 that is provided to engage the screw thread 58 of a tightening sleeve 4. The housing thread 56 is a complementary thread to the thread of the screw thread 58?. The housing thread 56 may, in one example, be an external thread and the screw thread 58 may be an internal thread.

Further, the housing element 6 comprises complimentary coupling teeth 60. The complimentary coupling teeth 60 are shaped complementary to the coupling teeth 46 of the pinch sleeve 2. Thus, the complementary coupling teeth 60 are configured to engage the coupling teeth 46 of the pinch sleeve 2. In conformity with the coupling teeth 46 of the pinch sleeve 2, the complementary coupling teeth 60 may be at least partially rounded. In particular, the roundings may be sinusoidal in shape. Additionally and/or cumulatively, the coupling teeth 46 may also be at least partially pointed.

When the housing element 6 and the pinch sleeve 2 are in an engaged state 62, the coupling teeth 46 and the complementary coupling teeth 60 may form a coupling, which is torsionally and additionally or cumulatively rotationally stiff.

Further, the housing element 6 encloses a cable volume 64 for receiving the? electric cable 8. In the assembled state, the cable volume 64 and the interior volume 40 may form a continuous volume. The central axis 20 of the continuous volume extends in the axial direction 14.

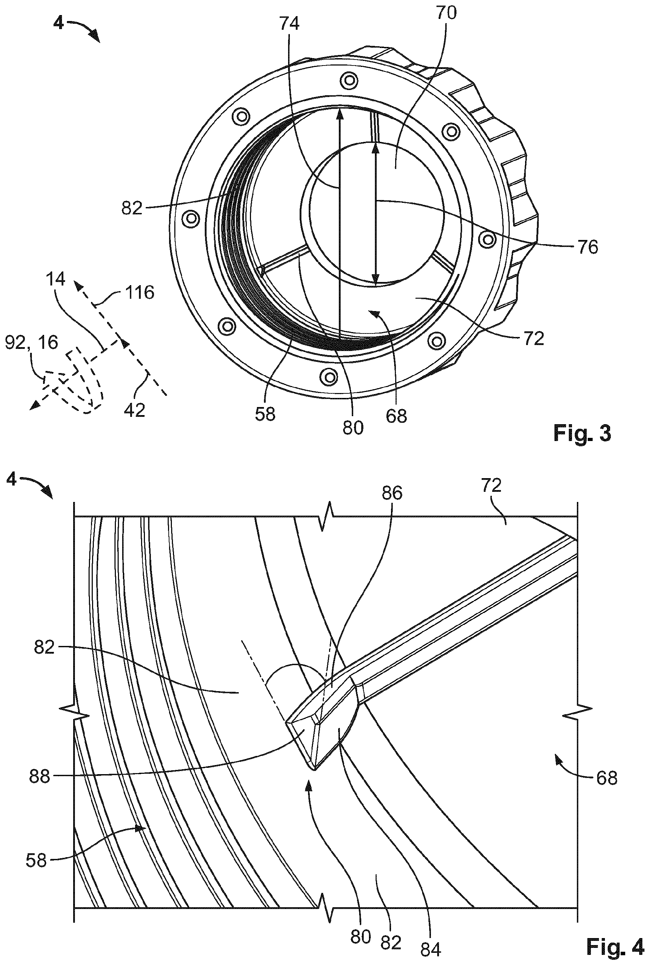

In the following, the structure of the tightening sleeve 4 according to a possible embodiment of the invention is described with reference to Fig. 3 and Fig. 4.

The tightening sleeve 4 has approximately the shape of a hollow cylinder 66. In the inside of the hollow cylinder 66, a receptacle 68 is located that is configured to receive the pinch sleeve 2 at least partially, preferably in its entirety. The pinch sleeve 2 may be inserted into the receptacle 68 in the axial direction 14. In particular, the length of the receptacle 68 may be larger than the length of the pinch sleeve 2 related to the axial direction 14. Further, the tightening sleeve 4 comprises a cable opening 70 for the electric cable 8. In particular, the cable opening 70 may be opposite the receptacle 68. Optionally, the cable opening 70 may be continuous with the receptacle 68.

The tightening sleeve 4 further comprises a bevel 72 that extends in the circumferential direction 16 and may be configured to abut the free ends 28 of the pinch fingers 22. In particular, the bevel 72 may be frusto-conical. The bevel 72 may taper in the axial direction away from the pinch sleeve 2 and/or tapered towards the cable opening 70. Optionally, the inner width of the receptacle 74 may be larger than the inner width of the cable opening 76. In this case, the bevel 72 may taper from the inner width of the receptacle 74 to the inner width of the cable opening 70. According to another aspect, the rim 78 of the cable opening 70 may be continuous with the bevel 72.

The tightening sleeve 4 further comprises at least one driver 80. The driver 80 may be located on an inner wall 82 of receptacle 68 and protrudes in the axial direction 14 and the radial inward direction 42. The driver 80 may extend in the axial direction 14 along the bevel 72. The driver 80 may have a saw-tooth cross-section in a plane perpendicular to the axial direction 14.

Further, the driver 80 comprises a first face 84 and a second face 86. The first face 84 faces in the circumferential direction 16. The second face 86 is located opposite to the first face 84. The second face 86 may be perpendicular to the circumferential direction 16. The first face 84 has a lower inclination 88 with respect to the circumferential direction 16 than the second face 86.

The number of drivers 80 may be adapted to the cable diameter and the size of the tightening sleeve 4. One, two, three or more drivers 80 may be provided. If a plurality of drivers 80 is provided, they may be arranged at equal distances in the circumferential direction 16.

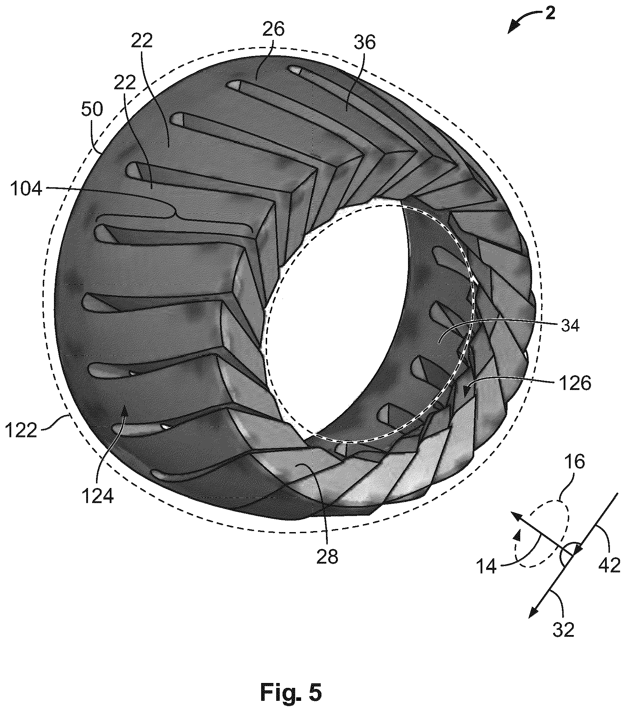

In the following, the functionality of an assembly 1 according to a possible embodiment is explained with reference to Fig. 1 to Fig. 5. Thereby, the interaction of the above-described components of the electric connector 48 is described exemplarily.

First, the electric cable 8 is positioned inside the cavity 12 of the assembly 1. The electric cable 8 penetrates the cable volume 64 of the housing element 6, the interior volume 40 of the pinch sleeve 2 and the receptacle 68 of the tightening sleeve 4. The electric cable 8 extends along the axial direction 14. It is coaxially surrounded by all elements of the assembly 1 in the circumferential direction 16.

Next, the tightening sleeve 4 is mounted on the housing element 6, such that the screw thread 58 of the tightening sleeve 4 engages the outer thread 90 of the housing element 6. In doing so, the pinch sleeve 2 enters into the receptacle 68 of the tightening sleeve 4. The drivers 80 of the tightening sleeve 4 are each positioned automatically between neighboring pinch fingers 22.

For tightening, the tightening sleeve 4 is rotated in the direction of its handedness 92, so that the tightening sleeve 4 is moved in an axial direction 14 relative to the pinch sleeve 2. After the tightening sleeve 4 has moved a certain distance in the axial direction 14, the bevel 72 abuts against the free ends of the pinch fingers 22. Thereby, the bevel 72 and the free ends 28 of the pinch fingers 22 are frictionally engaged and the bevel 72 exerts a bevel force 94 on the free ends 28 of the pinch fingers 22. The bevel force 94 comprises a radial bevel force component 96, an axial bevel force component 98 and a circumferential bevel force component 100. The radial bevel force component 96 points in the radial inward direction 42, the axial bevel force component 98 points in the axial direction 14 and the circumferential bevel force component 100 points in the circumferential direction 16. In particular, the circumferential bevel force component 100 points in the direction of the handedness 92 of the tightening sleeve 4.

The radial bevel force component 96 causes the free ends 28 of the pinch fingers 22 to be deflected in a radial inward direction 42. The free ends 28 of the pinch fingers 22 are thus pushed into the sealing 10, which surrounds the electric cable 8. When no sealing 10 is provided, the free ends 28 of the pinch fingers 22 may also be pushed directly into the electric cable 8. Due to the normal force 102 exerted on the electric cable 8, the electric cable 8 is fastened inside the assembly 1.

The axial bevel force component 98 causes the pinch sleeve 2 to be pushed against the housing element 6. As the pinch sleeve 2 is pushed against the housing element 6, the coupling teeth 46 of the pinch sleeve 2 frictionally engage the complementary coupling teeth 60 of the housing element 6, thus preventing relative rotational movement between the housing element 6 and the pinch sleeve 2. As the housing element 6 is immovable in the circumferential direction 16, a rotation of the pinch sleeve 2 is locked in and against the circumferential direction 16.

The circumferential bevel force component 100 causes the free ends 28 of the pinch fingers 22 to be deflected in a circumferential direction 16. Moreover, the at least one driver 80 engages between two neighboring pinch fingers 22 at an axial location 104. The axial location 104 is located between the bases 26 and the free ends 28 of the pinch fingers 22. As the tightening sleeve 4 is rotated in the direction of it handedness 92, the first face 84 of the at least one driver 80 comes into contact with the pinch fingers 22 at the axial location 104. Thereby, the first faces 84 of the drivers 80 and the pinch fingers 22 are frictionally engaged and the first faces 84 of the drivers 80 exert a driver force 106 on the pinch fingers 22. The driver force 106 has a circumferential driver force component 108, a radial driver force component 110 and an axial driver force component 112.

The circumferential driver force component 108 acts in the circumferential direction 16, more precisely in the direction of the handedness 92 of the tightening sleeve 4. The radial driver force component 110 acts in the radial inward direction 42 and the axial driver force component 112 acts in the axial direction 14.

The circumferential driver force component 108 causes the pinch fingers 22 to be deflected in a circumferential direction 16, the radial driver force component 110 causes the pinch fingers 22 to be deflected in the radial inward direction 42. The axial driver force component 112 causes the pinch sleeve 2 to be pushed against the housing element 6. The deflection of the pinch fingers 22 caused by the driver force 106 may be at its maximum at the axial location 104 where the drivers 80 get into contact with the pinch fingers 22. Further, the pinch fingers 22 may be torsionally distorted between the bases 26 and the axial location 104 where the drivers 80 are in contact with the pinch fingers 22.

When turning the tightening sleeve 4, the pinch fingers 22 continue to move along the first faces 84 of the drivers 80. When the axial locations 104 of the outer sections 36 of the pinch fingers 22 have passed the radially most inward portion 114 of the drivers 80, the driver force no longer is exerted on the pinch fingers 22 at the axial location 104 of the pinch fingers 22. As a result, the pinch fingers 22 snap back in the radial outward direction 116 at the axial location 104. The drivers 80 then again engage between two neighboring pinch fingers 22 at an axial location 104.

The snapping of the pinch fingers 22 occurs each time a driver 80 has overpassed a pinch finger 22 and engages between the next two neighboring pinch fingers 22. Due to this, a user may receive haptic feedback resembling the feedback from a ratchet during tightening the tightening sleeve 4.

In case the tightening sleeve 4 is rotated backwards against the direction of its handedness 92, the second faces 86 of the drivers 80 come into contact with the retaining protrusions 38 that protrude towards the interior volume 40 of the pinch fingers 22. As the second faces 86 of the drivers 80 are parallel to the retaining protrusion faces, the second faces 86 of the drivers 80 only exert a force in a circumferential direction 16. Thereby, the pinch fingers 22 cannot be deflected in a radial inward direction 42 so that the drivers 80 cannot pass over-or require a high torque to pass over-a pinch finger 22 against the direction of the handedness 92. As the pinch sleeve 2 is unable to rotate backwards due to the rotationally stiff coupling with the housing element 6, also the tightening sleeve 4 cannot rotate backwards.

During tightening, the forces exerted, from the bevel 72 to the free ends 28 of the pinch fingers 22 and from the drivers 80 to the pinch fingers 22, cause a deformation of the pinch sleeve 2. Before tightening, in a force-free state 30, the pinch sleeve 2 has the shape of a cylinder 18. During tightening, in a loaded state 120, the pinch sleeve 2 approximately assumes the shape of a frustocone 122, i.e. the diameter of the pinch sleeve 2 tapers in the axial direction.

The ring member 24 is located at the first end of the frustocone 122. The ring member 24 does not change its shape during tightening. At the second end of the frustocone 122, the free ends 28 of the pinch fingers 22 are located. In the loaded state 120, the pinch fingers 22 extend helically along the lateral surface of the frustocone 124. In particular, the free ends 28 of the pinch fingers 22 may abut each other in the circumferential direction 16 forming a continuous annular surface 126. After tightening, the continuous annular surface 126 has contact with the sealing 10 and respectively or cumulatively with the electric cable 8.

When tightening of the assembly 1 is completed, the normal force 102 exerted from the free ends 28 on the electric cable 8 holds the electric cable 8 inside the assembly 1. Even if the electric cable 8 relaxes over time so that the normal force 102 between the electric cable 8 and the pinch fingers 22 decreases, the tightening sleeve 4 is still prevented from loosening. This is due to the fact that the drivers 80 and the coupling teeth lock a backwards rotation with respect to the housing of the connector.

As a result, a stable and permanent fixation of the electric cable 8 in the assembly 1 is ensured.

### REFERENCE SIGNS

- 1: assembly
- 2: pinch sleeve
- 4: tightening sleeve
- 6: housing element
- 8: electric cable
- 10: sealing
- 12: cavity
- 14: axial direction
- 16: circumferential direction
- 18: cylinder
- 20: central axis
- 22: pinch fingers
- 24: ring member
- 26: base
- 28: free end
- 30: force-free state
- 32: radial direction
- 34: inner section
- 36: outer section
- 38: retaining protrusion
- 40: interior volume
- 42: radial inward direction
- 44: mantle surface
- 46: coupling teeth
- 48: electric connector
- 50: end face
- 52: lateral surface
- 54: housing cylinder
- 56: housing thread
- 58: screw thread
- 60: complementary coupling teeth
- 62: engaged state
- 64: cable volume
- 66: hollow cylinder
- 68: receptacle
- 70: cable opening
- 72: bevel
- 74: inner width of the receptacle
- 76: inner width of the cable opening
- 78: rim
- 80: driver
- 82: inner wall
- 84: first face
- 86: second face
- 88: inclination
- 90: outer thread
- 92: handedness
- 94: bevel force
- 96: radial bevel force component
- 98: axial bevel force component
- 100: circumferential bevel force component
- 102: normal force
- 104: axial location
- 106: driver force
- 108: circumferential driver force component
- 110: radial driver force component
- 112: axial driver force component
- 114: radially most inward portion
- 116: radial outward direction
- 118: retaining protrusion face
- 120: loaded state
- 122: frustocone
- 124: lateral surface of the frustocone
- 126: continuous annular surface

## Claims

1. A pinch sleeve (2) for pinching an electric cable (8) in an electric connector (48), wherein the pinch sleeve (2) surrounds an interior volume (40) for receiving the electric cable (8), the interior volume (40) penetrating the pinch sleeve (2) in an axial direction (14), wherein the pinch sleeve (2) comprises pinch fingers (22) that extend in the axial direction (14) from a respective base (26) to a respective free end (28) and that are arranged in a circumferential direction (16), the circumferential direction (16) extending around the axial direction (14), and a ring member (24) that connects the bases (26) of the pinch fingers (22) in the circumferential direction (16), and wherein the ring member (24) is provided with protruding coupling teeth (46) for rotational engagement with another element of the electric connector (48).

2. A pinch sleeve (2) according to claim 1, wherein the ring member (24) has an end face (50) facing away from the pinch fingers (22) along the axial direction (14) and wherein the end face (50) comprises the coupling teeth (46) that protrude along the axial direction (14) away from the pinch fingers (22).

3. A pinch sleeve (2) according to claim 1 or 2, wherein at least one of the pinch fingers (22) overlaps at least one neighboring pinch finger (22) in the radial direction (32), the radial direction (32) being perpendicular to the axial direction (14).

4. A pinch sleeve (2) according to any one of claims 1 to 3, wherein at least some of the pinch fingers (22) comprise a retaining protrusion (38) that protrudes towards the interior volume (40).

5. An assembly (1) comprising a pinch sleeve (2) according to any one of claims 1 to 4 and a housing element (6) of an electric connector (48), wherein the housing element (6) is provided with complementary coupling teeth (60), the complementary coupling teeth (60) of the housing element (6) being configured to engage the coupling teeth (46) of the pinch sleeve (2).

6. An assembly (1) comprising the pinch sleeve (2) according to any one of claims 1 to 5 and a tightening sleeve (4), wherein the tightening sleeve (4) comprises a bevel (72) that is configured to abut the free ends (28) of the pinch fingers (22), and at least one driver (80) that is configured to engage between two neighboring pinch fingers (22).

7. An assembly (1) according to claim 6, wherein the driver (80) is configured to engage between two neighboring pinch fingers (22) at at least one of the free ends (28) of the two neighboring pinch fingers (22) and a location between the free end (28) and the base (26) of the two neighboring pinch fingers (22).

8. An assembly (1) according to claim 6 or 7, wherein the at least one driver (80) protrudes from the tightening sleeve (4) in at least one of the axial direction (14) and a radial inward direction (42).

9. An assembly according to any one of claims 6 to 8, wherein the driver (80) extends in the axial direction (14) along the bevel (72).

10. An assembly according to any one of claims 6 to 9, wherein the tightening sleeve (4) comprises a receptacle (68) that is configured for insertion of at least the pinch fingers (22) of the pinch sleeve (2) in the axial direction, the receptacle (68) having a substantially cylindrical inner wall (82), the driver (80) being located on the inner wall (82).

11. An assembly (1) according to any one of claims 6 to 10, wherein the at least one driver (80) has a first face (84) and a second face (86), wherein the first face (84) faces in the circumferential direction (16) and the second face (86) is located opposite the first face (84) with respect to the circumferential direction (16), and wherein the first face (84) has a lower inclination (88) with respect to the circumferential direction (16) than the second face (86).

12. An assembly (1) according to claim 10 or 11, wherein the tightening sleeve (4) comprises a screw thread (58) having a handedness (92) and wherein the first face (84) faces in the direction of the handedness (92).

13. An electric connector (48) comprising an assembly (1) according to claim 5 and any one of claims 6 to 12, wherein the coupling teeth (46) of the pinch sleeve (2) engage the complementary coupling teeth (60) of the housing element (6), and wherein at least one driver (80) extends between two neighboring pinch fingers (22).

14. An electric connector (48) according to claim 13, wherein the pinch fingers (22) are torsionally distorted between their respective base (26) and the axial location (104) where the at least one driver (80) engages between two neighboring pinch fingers (22).

15. An electric connector (48) according to claim 13 or 14, wherein, at their free ends (28), the pinch fingers (22) abut each other in the circumferential direction (16) forming a continuous annular surface (126) that faces the interior volume (40).
